# EUROPEAN PATENT SPECIFICATION

(11) **EP 1 557 304 B1**
(45) Date of publication and mention of the grant of the patent: **16.04.2008**
(21) Application number: 05075037.1
(22) Date of filing: 07.01.2005
(51) Int. Cl.: B60G 17/015, F16F 9/53, B60G 17/06

(54) **Magnetorheological damper with thermal protection**
Magnetorheologischer Dämpfer mit Überhitzungsschutz
Amortisseur magnétorhéologique à protection anti-surchauffe

(30) Priority: 23.01.2004 US 538552 P
(43) Date of publication of application: 27.07.2005
(73) Proprietor: Delphi Technologies, Inc., Troy, MI 48007 (US)
(72) Inventor: Oakley, Robin, 60800 Trumilly (FR); Shal, David A., Bellbrook, OH 45305 (US); Dellinger, Darin D., Tipp City, OH 45371 (US)
(74) Representative: Denton, Michael John

(56) References cited:
- EP-A- 1 355 083
- DE-A1- 4 039 839
- GB-A- 2 255 150
- GB-A- 2 275 661
- US-A- 5 712 783

## Description

### Technical Field

The present invention relates to suspension controls using magneto-rheological (MR) dampers, such as struts and shocks, and more specifically to an MR damper current control technique that provides thermal protection.

### Background Of The Invention

Vehicle suspension systems using controllable dampers, such as monotube-type MR dampers and twin tube MR dampers, are known. Unlike twin tube type dampers, monotube-type dampers tend to generate "normal" damping forces when worked hard to high temperature. Because the monotube-type dampers continue to generate such high forces, they can overheat under rough conditions such as rough track endurance testing.

It would be desirable, therefore, to provide the ability to limit temperature increases of a controllable damper during certain conditions.

EP-A-1355083 discloses a method in accordance with the preamble of claim 1, but for temperature compensation. DE-A-4039839 discloses a suspension control system having data maps selected by current damping characteristics.

### Summary Of The Invention

The present invention in its various aspects is as claimed in the following claims.

In a first aspect, a method for controlling current delivery to a control coil of an MR damper in a wheeled vehicle is provided. The method involves the steps of: (a) as a function of at least damper temperature and vehicle speed, producing a scaling factor; (b) under at least certain conditions: (i) applying the scaling factor to a normal current command producing a scaled current command and (ii) delivering current to the control coil in accordance with the scaled current command.

In a further aspect, a method for modifying a normal control current level of a control coil of a monotube-type MR damper in a wheeled vehicle is provided. The method involves the steps of: (1) as a function of at least damper temperature and vehicle speed, producing a current scaling factor as follows: (a) the current scaling factor is "1" if either: (i) vehicle speed is above a threshold speed or (ii) damper temperature is below a threshold temperature, (b) the current scaling factor is less than "1" if both (i) vehicle speed is below the threshold speed and (ii) damper temperature is above the threshold temperature; and (2) delivering current to the control coil in accordance with the normal current level as scaled by the scaling factor.

### Detailed Description Of The Drawings

Fig. 1 is a schematic illustration of a vehicle with a suspension control system including MR dampers;
Fig. 2 is a depiction of one control scheme for adjusting damper coil current under certain conditions; and
Fig. 3 is a depiction of another control scheme for adjusting damper coil current under certain conditions.

### Description Of The Preferred Embodiment

An exemplary monotube-type MR damper to which various of the techniques described below may be applied is the MagneRide™ brand MR damper available from Delphi Corp. of Troy, Michigan U.S.A. However, other monotube-type MR dampers, as well as other controllable dampers, such solenoid-based dampers, motor-based dampers and pressure controlled dampers, are known and application of the following techniques to such dampers is recognized and within the scope of this application, in which case the current delivered to the control component of the damper would be selectively limited.

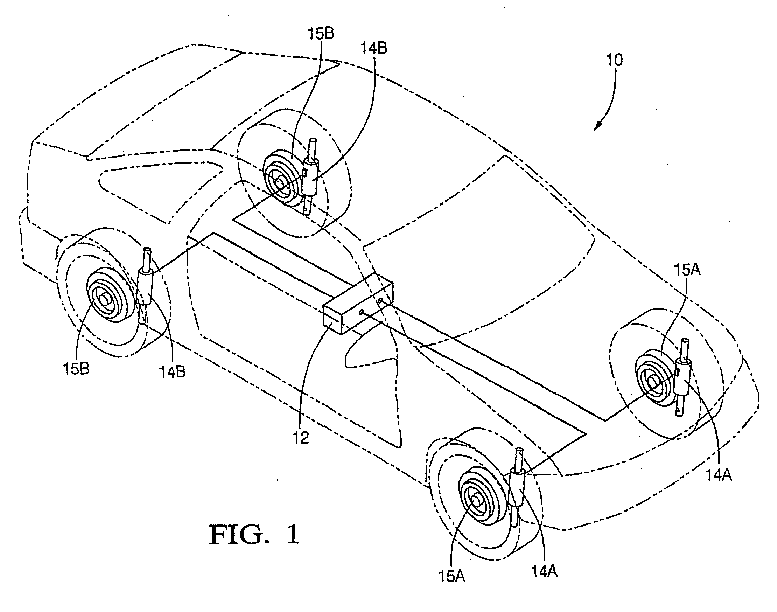

Referring to drawing Fig. 1, an exemplary vehicle 10 includes a suspension control system with control unit 12 connected to monotube-type MR dampers 14A connected between the vehicle frame or body and the front wheels 15A. Control unit 12 is also connected to monotube-type MR dampers 14B connected between the vehicle frame or body and the rear wheels 15B. Each damper includes an internal control coil to produce a magnetic field that adjusts damping characteristics. In normal operation, damper current control commands are produced by the control unit 12 and converted into corresponding current levels for controlling the respective dampers. In one implementation the damper current control command may be a PWM command and the control coil is energized with a PWM signal of varying duty cycle to effect an average current level through the control coil.

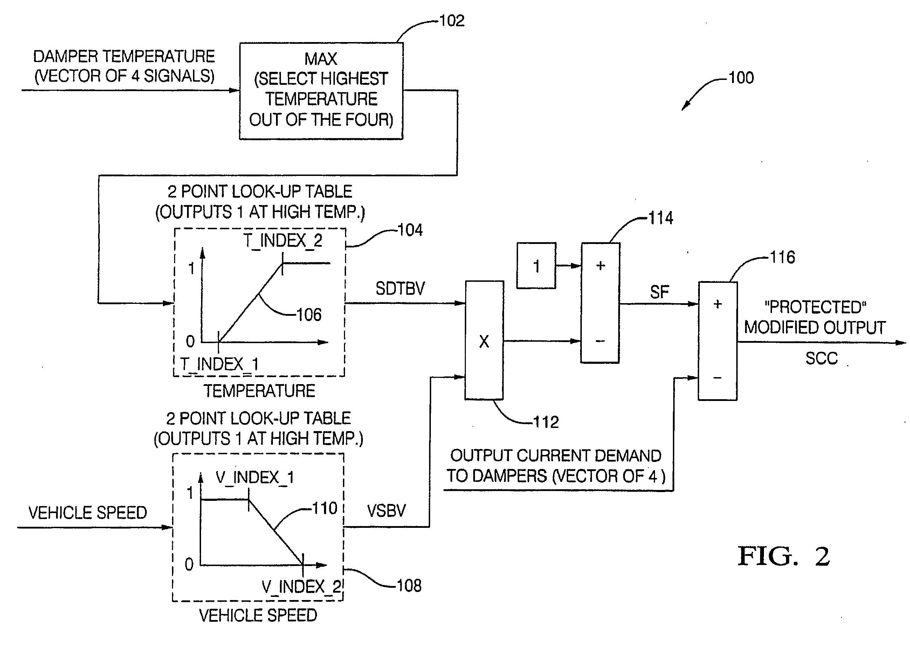

Referring now to Fig. 2, a control scheme 100 for use in limiting current during at least high temperature conditions of the MR damper is shown. Damper temperature is received in control block 102. In the illustrated embodiment the damper temperature for each damper may be provided to control block 102 and may be derived from a temperature sensor such as a thermocouple associated with each damper. Alternatively, the temperature of each damper could be derived or approximated from other monitored conditions of the vehicle. For example, one or more indications of road surface input energy may be used to identify conditions that may lead to excessive damper operating temperatures under normal current control commands.

In control block 102 the highest damper temperature is selected and used to access a look-up table 104 of damper temperature-based values that vary as a function of damper temperature. Alternatively, one of the other damper temperatures could be selected, or a damper temperature-based value could be generated for each individual damper based upon its corresponding damper temperature. As shown in table 104, the damper temperature-based value is at a minimum (0) when the damper temperature is below a low threshold temperature (T_index_1), and the damper temperature-based value is at a maximum (1) when the damper temperature is above a high threshold temperature (T_index_2); thus, the damper temperature-based value increases (see line 106) as the damper temperature increases from the low threshold temperature to the high threshold temperature. In the illustrated embodiment the damper temperature-based value increases (see line 106) proportionally as the damper temperature increases from the low threshold temperature to the high threshold temperature.

Vehicle speed is used to select a vehicle speed-based value using a look-up table 108. As reflected in table 108, the vehicle speed-based value is at a maximum (1) when the vehicle speed is below a low threshold speed (V_index_1), and the vehicle speed-based value is at a minimum (0) when the vehicle speed is above a high threshold speed (V_index_2); thus, the vehicle speed-based value decreases (see line 110) as the vehicle speed increases from the low threshold speed to the high threshold speed. In the illustrated embodiment the vehicle speed-based value decreases (see line 110) proportionally as the vehicle speed increases from the low threshold speed to the high threshold speed.

The selected damper temperature-based value (SDTBV) and the selected vehicle speed-based value (VSBV) are multiplied together as indicated in block 112 and the product is subtracted from 1 as indicated in block 114, producing a scaling factor SF. The normal current command (e.g., the current command that would produce desired suspension control) for each damper is then multiplied by the scaling factor SF as indicated at block 116 to produce a scaled current command (SCC) for each damper. Current is then delivered to each damper control coil at a level corresponding to its scaled current command. By reducing the current delivered during at least certain high damper temper temperature conditions, further increases in damper temperature can be moderated.

As reflected in the control scheme, if the damper temperature is below the low threshold temperature (T_index_1) or if the vehicle speed is above the high threshold speed (V_index_2), then the scaling factor SF will be 1 (the product of SDTBV and VSBV being 0) and will not impact the normal current commands for the dampers. At lower damper temperatures scaling is not needed because the risk of high temperature damper failure is not present. At higher vehicle speeds scaling is not as necessary because thermal dissipation of the damper tends to be greater at higher vehicles speeds. It is also desirable to maintain the most effective damper control at higher vehicle speeds.

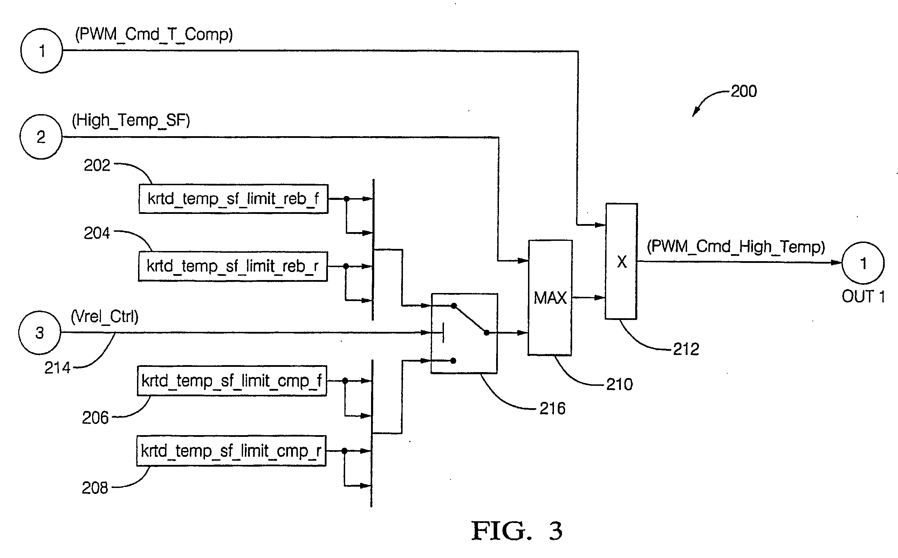

Referring now to Fig. 3, in another variation the scaling factor SF may be compared to various thresholds according to certain damper conditions in order to maintain at least some minimum level of damper control at all times.

For a given front damper in rebound, the scaling factor SF, which may be determined per Fig. 2, is compared against a minimum permitted scaling factor 202 for the front dampers when in rebound. The greater of the two values is selected as indicated at block 210 and applied against the current command for the given front damper as indicated at block 212.

For a given rear damper in rebound, the scaling factor SF, which may be determined per Fig. 2, is compared against a minimum permitted scaling factor 204 for the rear dampers when in rebound. The greater of the two values is selected as indicated at block 210 and applied against the current command for the given rear damper as indicated at block 212.

For a given front damper under compression, the scaling factor SF, which may be determined per Fig. 2, is compared against a minimum permitted scaling factor 206 for the front dampers when under compression. The greater of the two values is selected as indicated at block 210 and applied against the current command for the given front damper as indicated at block 212.

For a given rear damper under compression, the scaling factor SF, which may be determined per Fig. 2, is compared against a minimum permitted scaling factor 208 for the rear dampers when under compression. The greater of the two values is selected as indicated at block 210 and applied against the current command for the given rear damper as indicated at block 212.

The command signal 214 may be a vector of four relative velocity signals, one from each damper, used to control a switch 216 that permits the selection of a scale factor limit for each damper individually.

## Claims

1. A method for controlling current delivery to a control component of a controllable damper (14A, 14B) in a wheeled vehicle (10), **characterized by** the steps of:
as a function of at least damper temperature and vehicle speed, producing a scaling factor (114);
under at least certain conditions:
applying the scaling factor to a normal current command producing a scaled current command (116); and
delivering current to the control component in accordance with the scaled current command.

2. The method of claim 1 wherein the scaling factor (114) is a function of a damper temperature-based value and a vehicle speed-based value, the damper temperature-based value tends to increase as the damper temperature increases, and the vehicle speed-based value tends to decrease as the vehicle speed increases.

3. The method of claim 2 wherein the damper temperature-based value is at a minimum when the damper temperature is below a low threshold temperature, the damper temperature-based value is at a maximum when the damper temperature is above a high threshold temperature, and the damper temperature-based value increases as the damper temperature increases from the low threshold temperature to the high threshold temperature.

4. The method of claim 3 wherein the vehicle speed-based value is at a maximum when the vehicle speed is below a low threshold speed, the vehicle speed-based value is at a minimum when the vehicle speed is above a high threshold speed, and the vehicle speed-based value decreases as the vehicle speed increases from the low threshold speed to the high threshold speed.

5. The method of claim 4 wherein the minimum of the damper temperature-based value is 0 and the maximum of the damper temperature-based value is 1, and the maximum of the vehicle speed-based value is 1 and the minimum of the vehicle speed-based value is 0.

6. The method of claim 5 wherein a first look-up table (104) is used to determine the damper temperature-based value as a function of damper temperature, and a second look-up table is used to determine the vehicle speed-based value as a function of vehicles speed.

7. The method of claims 2-6 wherein the scaling factor is the value 1 reduced by a product of the damper temperature-based value and the vehicle speed-based value.

8. The method of claims 1-7 including the further step (210) of comparing the scaling factor to a minimum scaling factor, and:
(a) if the scaling factor is greater than the minimum scaling factor, applying the scaling factor to the normal current command producing the scaled current command and delivering current to the control component in accordance with the scaled current command; and
(b) if the scaling factor is less than the minimum scaling factor, applying the minimum scaling factor to the normal current command producing a minimum scaled current command and delivering current to the control component in accordance with the minimum scaled current command.

9. The method of claim 8 wherein the minimum scaling factor is set as a function of damper front/rear location in the vehicle and damper rebound/compression status.

10. The method of claims 1-9 wherein the controllable damper (14A, 14B) is a monotube-type damper.

11. The method of claim 10 wherein the controllable damper (14A, 14B) is a monotube type MR damper.

12. The method of claims 1-11 wherein damper temperature is derived from one or more other monitored vehicle conditions.

13. The method of claim 1, wherein the scaling factor (114) is as follows:
(a) the scaling factor is assigned a value of 1 if either: (i) vehicle speed is above a threshold speed or (ii) damper temperature is below a threshold temperature,
(b) the scaling factor is less than 1 if both (i) vehicle speed is below the threshold speed and (ii) damper temperature is above the threshold temperature.

14. The method of claim 13 wherein the controllable damper (14A, 14B) is an MR damper and the control component is a damper coil.

## Patentansprüche

1. Verfahren zum Steuern einer Stromlieferung an eine Steuerkomponente eines steuerbaren Dämpfers (14A, 14B) in einem Fahrzeug (10) mit Rädern,
**gekennzeichnet durch** die Schritte, dass:
als eine Funktion zumindest einer Dämpfertemperatur und einer Fahrzeuggeschwindigkeit ein Skalierfaktor (114) erzeugt wird;
unter zumindest bestimmten Bedingungen:
der Skalierfaktor auf eine normale Stromanweisung angewendet wird, wobei eine skalierte Stromanweisung (116) erzeugt wird; und
Strom an die Steuerkomponente gemäß der skalierten Stromanweisung geliefert wird.

2. Verfahren nach Anspruch 1,
wobei der Skalierfaktor (114) eine Funktion eines dämpfertemperaturbasierten Wertes und eines fahrzeuggeschwindigkeitsbasierten Wertes ist, wobei der dämpfertemperaturbasierte Wert zu einer Erhöhung neigt, wenn die Dämpfertemperatur zunimmt, und der fahrzeuggeschwindigkeitsbasierte Wert zu einer Abnahme neigt, wenn die Fahrzeuggeschwindigkeit zunimmt.

3. Verfahren nach Anspruch 2,
wobei der dämpfertemperaturbasierte Wert sich bei einem Minimum befindet, wenn die Dämpfertemperatur unter einer unteren Schwellentemperatur liegt, der dämpfertemperaturbasierte Wert sich bei einem Maximum befindet, wenn die Dämpfertemperatur über einer oberen Schwellentemperatur liegt und der dämpfertemperaturbasierte Wert zunimmt, wenn die Dämpfertemperatur von der unteren Schwellentemperatur zu der oberen Schwellentemperatur zunimmt.

4. Verfahren nach Anspruch 3,
wobei der fahrzeuggeschwindigkeitsbasierte Wert sich bei einem Maximum befindet, wenn die Fahrzeuggeschwindigkeit unter einer unteren Schwellengeschwindigkeit liegt, der fahrzeuggeschwindigkeitsbasierte Wert sich bei einem Minimum befindet, wenn die Fahrzeuggeschwindigkeit über einer oberen Schwellengeschwindigkeit liegt und der fahrzeuggeschwindigkeitsbasierte Wert abnimmt, wenn die Fahrzeuggeschwindigkeit von der unteren Schwellengeschwindigkeit zu der oberen Schwellengeschwindigkeit zunimmt.

5. Verfahren nach Anspruch 4,
wobei das Minimum des dämpfertemperaturbasierten Wertes 0 ist und das Maximum des dämpfertemperaturbasierten Wertes 1 ist und das Maximum des fahrzeuggeschwindigkeitsbasierten Wertes 1 ist und das Minimum des fahrzeuggeschwindigkeitsbasierten Wertes 0 ist.

6. Verfahren nach Anspruch 5,
wobei eine erste Nachschlagetabelle (104) dazu verwendet wird, den dämpfertemperaturbasierten Wert als eine Funktion der Dämpfertemperatur zu bestimmen, und eine zweite Nachschlagetabelle verwendet wird, um den fahrzeuggeschwindigkeitsbasierten Wert als eine Funktion der Fahrzeuggeschwindigkeit zu bestimmen.

7. Verfahren nach einem der Ansprüche 2 bis 6,
wobei der Skalierfaktor der Wert 1 ist, der durch ein Produkt des dämpfertemperaturbasierten Wertes und des fahrzeuggeschwindigkeitsbasierten Wertes reduziert ist.

8. Verfahren nach einem der Ansprüche 1 bis 7,
mit dem weiteren Schritt (210), dass:
der Skalierfaktor mit einem minimalen Skalierfaktor verglichen wird, und:
(a) wenn der Skalierfaktor größer als der minimale Skalierfaktor ist, der Skalierfaktor auf eine normale Stromanweisung angewendet wird, wobei die skalierte Stromanweisung erzeugt wird, und Strom an die Steuerkomponente gemäß der skalierten Stromanweisung geliefert wird; und
(b) wenn der Skalierfaktor kleiner als der minimale Skalierfaktor ist, der minimale Skalierfaktor an die normale Stromanweisung angelegt wird, wobei eine minimale skalierte Stromanweisung erzeugt wird, und Strom an die Steuerkomponente gemäß der minimalen skalierten Stromanweisung geliefert wird.

9. Verfahren nach Anspruch 8,
wobei der minimale Skalierfaktor als eine Funktion einer Dämpfer-Front/Heck-Position in dem Fahrzeug und eines Dämpfer-Ausfederungs/Kompressionsstatus eingestellt ist.

10. Verfahren nach einem der Ansprüche 1 bis 9,
wobei der steuerbare Dämpfer (14A, 14B) ein Dämpfer vom Einzelrohrtyp ist.

11. Verfahren nach Anspruch 10,
wobei der steuerbare Dämpfer (14A, 14B) ein MR-Dämpfer vom Einzelrohrtyp ist.

12. Verfahren nach einem der Ansprüche 1 bis 11,
wobei die Dämpfertemperatur von einem oder mehreren anderen überwachten Fahrzeugbedingungen abgeleitet wird.

13. Verfahren nach Anspruch 1,
wobei sich der Skalierfaktor (114) darstellt, wie folgt:
(a) der Skalierfaktor ist einem Wert von 1 zugeordnet, wenn entweder: (i) eine Fahrzeuggeschwindigkeit über einer Schwellengeschwindigkeit liegt oder (ii) eine Dämpfertemperatur unter einer Schwellentemperatur liegt,
(b) der Skalierfaktor ist kleiner als 1, wenn sowohl (i) die Fahrzeuggeschwindigkeit unter der Schwellengeschwindigkeit liegt als auch (ii) die Dämpfertemperatur über der Schwellentemperatur liegt.

14. Verfahren nach Anspruch 13,
wobei der steuerbare Dämpfer (14A, 14B) ein MR-Dämpfer ist und die Steuerkomponente eine Dämpferwicklung ist.

## Revendications

1. Procédé pour commander une délivrance de courant vers un composant de commande d'un amortisseur pouvant être commandé (14A, 14B) dans un véhicule à roues (10), **caractérisé par** les étapes consistant à :
en fonction d'au moins une température d'amortisseur et une vitesse de véhicule, produire un facteur d'échelle (114),
sous au moins certaines conditions :
appliquer le facteur d'échelle à des instructions de courant normal en produisant une instruction de courant mis à l'échelle (116), et
délivrer du courant vers le composant de commande selon l'instruction de courant mis à l'échelle.

2. Procédé selon la revendication 1, dans lequel le facteur d'échelle (114) est fonction d'une valeur basée sur une température d'amortisseur et d'une valeur basée sur une vitesse de véhicule, la valeur basée sur une température d'amortisseur ayant tendance à augmenter lorsque la température d'amortisseur augmente, et la valeur basée sur une vitesse de véhicule ayant tendance à diminuer lorsque la vitesse de véhicule augmente.

3. Procédé selon la revendication 2, dans lequel la valeur basée sur une température d'amortisseur est à un minimum lorsque la température d'amortisseur est sous une température de seuil basse, la valeur basée sur une température d'amortisseur est à un maximum lorsque la température d'amortisseur est au-dessus d'une température de seuil élevée, et la valeur basée sur une température d'amortisseur augmente lorsque la température d'amortisseur augmente à partir de la température de seuil basse vers la température de seuil élevée.

4. Procédé selon la revendication 3, dans lequel la valeur basée sur une vitesse de véhicule est à un maximum lorsque la vitesse de véhicule est sous une vitesse de seuil basse, la valeur basée sur une vitesse de véhicule est à un minimum lorsque la vitesse de véhicule est au-dessus d'une vitesse de seuil élevée, et la valeur basée sur une vitesse de véhicule diminue lorsque la vitesse de véhicule augmente à partir de la vitesse de seuil basse vers la vitesse de seuil élevée.

5. Procédé selon la revendication 4, dans lequel le minimum de la valeur basée sur une température d'amortisseur est 0, et le maximum de la valeur basée sur une température d'amortisseur est 1, et le maximum de la valeur basée sur une vitesse de véhicule est 1, et le minimum de la valeur basée sur une vitesse de véhicule est 0.

6. Procédé selon la revendication 5, dans lequel une première table à consulter (104) est utilisée pour déterminer la valeur basée sur une température d'amortisseur en fonction de la température d'amortisseur, et une seconde table à consulter est utilisée pour déterminer la valeur basée sur une vitesse de véhicule en fonction de la vitesse de véhicule.

7. Procédé selon l'une quelconque des revendications 2 à 6, dans lequel le facteur d'échelle est la valeur 1 diminuée du produit de la valeur basée sur une température d'amortisseur et de la valeur basée sur une vitesse de véhicule.

8. Procédé selon l'une quelconque des revendications 1 à 7, comportant l'étape supplémentaire (210) consistant à comparer le facteur d'échelle à un facteur d'échelle minimum, et :
(a) si le facteur d'échelle est supérieur au facteur d'échelle minimum, appliquer le facteur d'échelle à l'instruction de courant normal en produisant l'instruction de courant mis à l'échelle, et délivrer du courant vers le composant de commande selon l'instruction de courant mis à l'échelle, et
(b) si le facteur d'échelle est inférieur au facteur d'échelle minimum, appliquer le facteur d'échelle minimum à l'instruction de courant normal en produisant une instruction de courant mis à l'échelle minimum, et délivrer du courant au composant de commande selon l'instruction de courant mis à l'échelle minimum.

9. Procédé selon la revendication 5, dans lequel le facteur d'échelle minimum est établi en fonction de l'emplacement avant/arrière de l'amortisseur dans le véhicule et l'état de rebond/compression de l'amortisseur.

10. Procédé selon l'une quelconque des revendications 1 à 9, dans lequel l'amortisseur pouvant être commandé (14A, 14B) est un amortisseur de type monotube.

11. Procédé selon la revendication 10, dans lequel l'amortisseur pouvant être commandé (14A, 14B) est un amortisseur mangétorhéologique de type monotube.

12. Procédé selon l'une quelconque des revendications 1 à 11, dans lequel la température d'amortisseur est déduite d'une ou plusieurs autres conditions de véhicule surveillées.

13. Procédé selon la revendication 1, dans lequel le facteur d'échelle (114) est le suivant :
(a) le facteur d'échelle est doté d'une valeur de 1 si : (i) la vitesse de véhicule est au-dessus d'une vitesse de seuil ou (ii) la température d'amortisseur est en dessous d'une température de seuil,
(b) le facteur d'échelle est inférieur à 1 si (i) la vitesse de véhicule est en dessous de la vitesse de seuil et (ii) la température d'amortisseur est au-dessus de la température de seuil.

14. Procédé selon la revendication 13, dans lequel l'amortisseur pouvant être commandé (14A, 14B) est un amortisseur magnétorhéologique, et le composant de commande est une bobine d'amortisseur.
